# EUROPEAN PATENT SPECIFICATION

(11) **EP 4 290 629 B1**
(45) Date of publication and mention of the grant of the patent: **19.11.2025**
(21) Application number: 22784788.6
(22) Date of filing: 11.03.2022
(51) Int. Cl.: H01M 10/04, H01M 50/406, H01M 50/46, B23K 26/38, B23K 26/08, B23K 26/06, B23K 26/402, H01M 4/04, H01M 10/0585, B23K 26/082, B23K 101/16, B23K 101/36

(54) **SEPARATOR CUTTING DEVICE, AND ELECTRODE CELL MANUFACTURING SYSTEM COMPRISING SAME**
SEPARATORSCHNEIDEVORRICHTUNG UND ELEKTRODENZELLENHERSTELLUNGSSYSTEM DAMIT
DISPOSITIF DE DÉCOUPE DE SÉPARATEUR, ET SYSTÈME DE FABRICATION DE CELLULE D'ÉLECTRODE LE COMPRENANT

(30) Priority: 07.04.2021 KR 20210045523
(43) Date of publication of application: 13.12.2023
(73) Proprietor: LG ENERGY SOLUTION, LTD., Seoul 07335 (KR)
(72) Inventor: LEE, Seo Jun, Daejeon 34122 (KR); KIM, Tae Su, Daejeon 34122 (KR); LEE, Hyuk Soo, Daejeon 34122 (KR); PARK, Jung Hyun, Daejeon 34122 (KR)
(74) Representative: Plasseraud IP
(86) International application number: PCT/KR2022/003470
(87) International publication number: WO 2022/215878

(56) References cited:
- EP-A2- 0 418 519
- DE-A1- 102019 115 554
- JP-A- 2018 037 143
- KR-A- 19990 079 499
- KR-A- 20030 064 088
- KR-A- 20100 008 048
- KR-A- 20140 007 070
- US-A- 5 303 081
- US-A1- 2019 160 596

## Description

The present invention relates to a separator cutting device for cutting a sheet-shaped separator included in an electrode stack, and an electrode cell manufacturing system including the same, see claims 1 and 11.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary battery may be classified according to the structure of an electrode cell having a positive electrode/separator/negative electrode structure. The stack type secondary battery has a structure in which electrodes, each of which is cut to a certain size, are sequentially stacked with a separator therebetween, and the winding type secondary battery has a structure in which electrodes, each of which is not cut, and a separator interposed between the electrodes are stacked to be wound at the same time.

Particularly, a method for manufacturing the stack type secondary battery may include a process of providing electrodes between upper and lower separators, each of which has a sheet shape, at a predetermined interval to form an electrode stack and a process of cutting portions, at which the electrodes are not stacked, of the upper and lower separators of the electrode stack in a width direction.

In this regard, in the prior art, the upper and lower separators were mechanically cut using a knife or the like. However, in this manner, there is a problem in that it is difficult to quickly and precisely cut the separator having a wide width or a fast moving speed. DE 10 2019 115554 A1 shows a device for laser processing a workpiece and US 2019/160596 A1 (describing the preamble of claims 1 and 11) shows an electrode sheet manufacturing apparatus.

### DISCLOSURE OF THE INVENTION

### TECHNICAL PROBLEM

One object to be achieved by the present invention is to provide a separator cutting device capable of quickly and precisely cutting a separator of an electrode stack.

Another object to be achieved by the present invention is to provide a separator cutting device capable of being installed in a relatively narrow space above a separator.

Further another object to be achieved by the present invention is to provide an electrode cell manufacturing system including the separator cutting device.

### TECHNICAL SOLUTION

A separator cutting device according to the present invention is defined in claim 1, for cutting a sheet-shaped separator laminated **with** at least one electrode. The separator cutting device includes a laser generator configured to emit laser beam; a scanner configured to control an optical path of the laser beam emitted from the laser generator; and an end mirror configured to reflect the laser beam passing through the scanner toward the separator and disposed at a side of the scanner.

A focus spot of the laser beam focused onto the separator may be variable within a processing area on the separator by the scanner, and a surface area of the end mirror may be less than or equal to half of a surface area of the processing area.

A height of the end mirror may be higher than that of the scanner with respect to the separator.

The scanner includes: a first scanning mirror rotating about a first rotation axis; a second scanning mirror rotating about a second rotation axis perpendicular to the first rotation axis, configured to reflect laser beam reflected by the first scanning mirror, and may be disposed at a position higher than that of the first scanning mirror; and a condensing lens configured to condense laser beam reflected by the second scanning mirror.

Each of the condensing lens and the end mirror may have a height greater than that of the first scanning mirror with respect to the separator.

The condensing lens is disposed, according to the present invention, between the end mirror and the second scanning mirror in a horizontal direction.

The laser generator may emit laser beam having a wavelength band of 9 micrometers to 10.6 micrometers.

The end mirror may include at least one material of copper (Cu), aluminum (Al), gold (Au), silver (Ag), tungsten (W), molybdenum (Mo), or silicon (Si).

A heatsink may be provided in the end mirror.

The end mirror may include: a mirror body; and a coating layer applied to the mirror body to reflect the laser beam and having reflectance greater than that of the mirror body.

The mirror body may include at least one of copper (Cu), aluminum (Al), or silicon (Si), and the coating layer may include at least one of a dielectric or silver.

An electrode cell manufacturing system according to the present invention is defined in claim 11, and includes a laminator configured to roll an electrode stack including a pair of sheet-shaped separators and a plurality of electrodes disposed at a predetermined interval between the pair of separators; and a separator cutting device disposed behind the laminator in a moving direction of the electrode stack and configured to cut a portion of each of the pair of separators, which corresponds between the plurality of electrodes, wherein a separator cutting device as described above is provided. The separator cutting device includes a laser generator configured to emit laser beam; a scanner configured to control an optical path of the laser beam emitted from the laser generator; and an end mirror configured to reflect the laser beam passing through the scanner toward the separator and disposed at a side of the scanner.

### ADVANTAGEOUS EFFECTS

According to the preferred embodiment of the present invention, the separator of the electrode stack may be quickly and precisely cut when compared to the mechanical cutting method.

In addition, since the focus spot of the laser moves quickly by the scanner, the separator having the wide width or the fast moving speed may also be cut quickly and precisely.

In addition, since the length of the optical path of the laser beam passing through the condensing lens in the vertical direction is reduced by the end mirror, the space required for installing the separator cutting device above the separator may be reduced.

In addition, the end mirror may include at least one of copper (Cu), aluminum (Al), gold (Au), silver (Ag), tungsten (W), molybdenum (Mo), or silicon (Si). Thus, the end mirror may have high heat resistance against the laser beam and high reflectance.

In addition, the end mirror may include the coating layer. Thus, the reflectance of the end mirror may be further improved.

In addition, the end mirror may be provided with the heatsink. Thus, it may be possible to prevent the reflectance of the end mirror from reducing and prevent the shape deformation due to thermal expansion from occurring.

### BRIEF DESCRIPTION OF THE DRAWINGS

FIG. 1 is a schematic view illustrating an electrode cell manufacturing system according to an embodiment of the present invention.
FIG. 2 is a view illustrating a configuration of a separator cutting device according to an embodiment of the present invention.
FIG. 3 is a cross-sectional view of an end mirror according to an embodiment of the present invention.
FIG. 4 is a plan view of a heatsink illustrated in FIG. 3.
FIG. 5 is a cross-sectional view of an end mirror according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

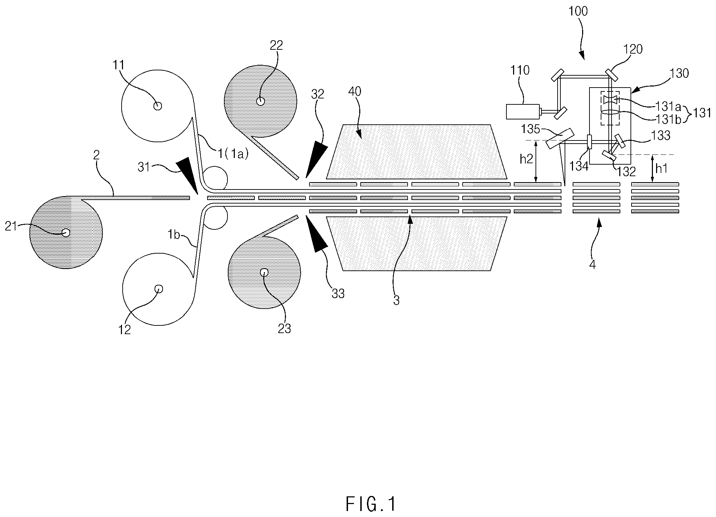

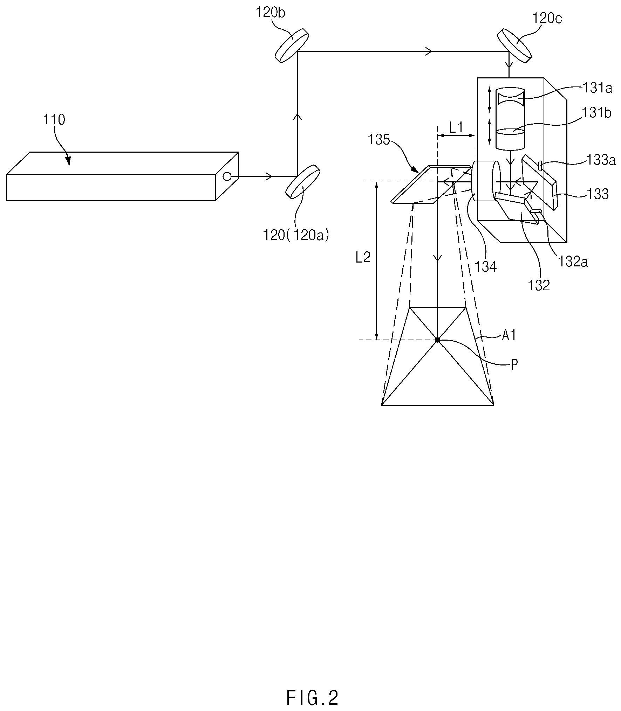

FIG. 1 is a schematic view illustrating an electrode cell manufacturing system according to an embodiment of the present invention, and FIG. 2 is a view illustrating a configuration of a separator cutting device according to an embodiment of the present invention.

An electrode cell manufacturing system according to an embodiment of the present invention may include separator unwinders 11 and 12, electrode unwinders 21, 22, and 23, electrode cutters 31, 32, and 33, a laminator 40, and a separator cutting device 100.

A separator roll on which the sheet-shaped separator 1 is wound may be mounted on the separator unwinders 11 and 12.

The separator unwinders 11 and 12 may unwind the separator roll to unwind the separator 1. For example, each of the separator unwinders 11 and 12 may include a roller, on which the separator roll is mounted, and a motor allowing the roller to rotate.

The separator unwinders 11 and 12 may be provided in a pair to unwind a pair of separators 1 that are parallel to each other. In more detail, the separator unwinder 11 and 12 may include a first separator unwinder 11 unwinding an upper separator 1a and a second separator unwinder 12 unwinding a lower separator 1b. The pair of separators 1 may move in parallel to each other by a guide roller.

An electrode roll on which the sheet-shaped electrode 2 is wound may be mounted on each of the electrode unwinders 21, 22, and 23. Each of the electrode unwinders 21, 22, and 23 may unwind the electrode roll to unwind the electrode 2. For example, each of the electrode unwinders 21, 22, and 23 may include a roller, on which the electrode roll is mounted, and a motor allowing the roller to rotate.

The electrode unwinders 21, 22 and 23 may be provided in plurality. In more detail, the electrode unwinders 21, 22, and 23 may include a first electrode unwinder 21 unwinding the electrode 2 between the pair of separators 1 and a second electrode unwinder 22 unwinding the electrode 2 toward a top surface of the upper separator 1a. The electrode unwinders 21, 22, and 23 may further include a third electrode unwinder 23 unwinding the electrode 2 toward a bottom surface of the lower separator 1b.

The electrode 2 unwound from the first electrode unwinder 21 may extend in a direction parallel to the separator 1. On the other hand, the electrode 2 unwound from the second electrode unwinder 22 and the third electrode unwinder 23 may extend in an oblique direction with respect to the separator 1.

The electrode cutters 31, 32, and 33 may cut the electrode 2 at a predetermined interval. Each of the electrode cutters 31, 32, and 33 may include a blade and be in direct contact with the electrode 2 to mechanically cut the electrode 2.

The electrode cutters 31, 32, and 33 may be provided in plurality for cutting the sheet-shaped electrodes 2 unwound from the plurality of electrode unwinders 21, 22, and 23. In more detail, the electrode cutters 31, 32, and 33 may include a first electrode cutter 31 cutting the electrode 2 unwound from the first electrode unwinder 21, a second electrode cutter 32 cutting the electrode 2 unwound from the second electrode unwinder 22, and a third electrode cutter 33 cutting the electrode 2 unwound from the third electrode unwinder 23.

The plurality of electrodes 2 cut by the respective electrode cutters 31, 32, and 33 may be disposed at a predetermined interval in a longitudinal direction of the separator 1.

The plurality of electrodes 2 cut by the first electrode cutter 31 may be disposed between the pair of separators 1, the plurality of electrodes 2 cut by the second electrode cutter 32 may be disposed on a top surface of the upper separator 1a, and the plurality of electrodes 2 cut by the third electrode cutter 33 may be disposed on a bottom surface of the lower separator 1b.

Thus, the pair of sheet-shaped separators 1 and the plurality of cut electrodes 2 may be alternately stacked to form an electrode stack 3.

The laminator 40 may roll (laminate) the electrode stack 3. In more detail, the laminator 40 may roll the pair of sheet-shaped separators 1 and the plurality of electrodes 2 disposed at the predetermined interval between the pair of separators 1 with each other.

For example, the laminator 40 may include a pair of heaters spaced apart from each other with the electrode stack 3 therebetween. In addition, the laminator 40 may further include a pair of rollers (not shown) disposed behind the pair of heaters in a moving direction of the electrode stack 3. However, the configuration of the laminator 40 is not limited thereto and may vary as necessary.

The separator cutting device 100 may be disposed behind the laminator 40 in the moving direction of the electrode stack 3.

The separator cutting device 100 may cut a portion, on which the electrode 2 is not stacked, of the pair of separators 1 of the electrode stack 3 laminated by the laminator 40. That is, the separator cutting device 100 may cut a portion of the pair of separators 1, which corresponds between the plurality of electrodes 2. Thus, an electrode cell 4 in which the cut separators 1 and the electrodes 2 are alternately stacked may be manufactured.

The separator cutting device 100 may cut the sheet-shaped separator 1 in a non-contact manner using a laser. That is, the separator cutting device 100 may be a 3D laser scanner.

In more detail, the separator cutting device 100 may include a laser generator 110 emitting laser beam, a scanner 130 controlling an optical path of the laser beam emitted from the laser generator 110, and an end mirror 135 reflecting the laser beam passing through the scanner 130 toward the separator 1.

The laser generator 110 may be a CO₂ laser in which a medium for generating the laser beam is carbon dioxide. That is, the laser generator 110 may emit laser beam having a wavelength band of 9 micrometers to 10.6 micrometers. For example, the laser generator 110 may emit a laser beam having a wavelength of 9.3 micrometers.

Since the laser beam having the wavelength band may generate high heat, the separator 1 may be heated to be melted or evaporated. Therefore, when compared to mechanical cutting, there are advantages in that precise and neat cutting is possible, and mechanical wear does not occur.

The laser beam emitted from the laser generator 110 may be incident into the scanner 130 through at least one path conversion mirror 120.

For example, the path conversion mirror 120 may include a first mirror 120a, a second mirror 120b, and a third mirror 120c, which are sequentially disposed with respect to the optical path of the laser beam.

The laser generator 110 may emit laser beam in a horizontal direction, the first mirror 120a may be disposed at a side of the laser generator 110, the second mirror 120b may be disposed above the first mirror 120a, and the third mirror 120c may be disposed at a side of the second mirror 120b and also disposed above the scanner 130. In this case, the first mirror 120a may reflect the laser beam emitted from the laser generator 110 upward toward the second mirror 120b, the second mirror 120b may reflect the laser beam reflected by the first mirror 120a toward the third mirror 120c in a horizontal direction, and the third mirror 120c may reflect the laser beam reflected by the second mirror 120b downward toward the scanner 130.

However, the direction in which the laser generator 110 emits the laser beam and the number and arrangement of the path conversion mirrors 120 may be changed as necessary.

The scanner 130 may be a galvanometer.

The scanner 130 may include an optical width controller 131, a pair of scanning mirrors 132 and 133, and a condensing lens 134, which are sequentially disposed along a path of the laser beam.

The optical width controller 131 may vary a distance between a focal spot P of the laser beam and the separator 1. For example, the focal spot P of the laser beam may be adjusted to be disposed on or adjacent to a surface of the upper separator 1a, and in this case, the upper separator 1a may be easily cut. In addition, the focal spot P of the laser beam may be adjusted to be disposed on or adjacent to a surface of the lower separator 1b, and in this case, the lower separator 1b may be easily cut.

However, the present invention is not limited thereto, and if an output of the laser beam is sufficiently strong, even though the focal spot P of the laser beam is disposed between the pair of separators 1, disposed above the upper separator 1a, or disposed below the lower separator 1b, the pair of separators 1 may be cut at the same time.

In more detail, the optical width controller 131 may include a first lens 131a and a second lens 131b through which the laser beam sequentially passes and of which a distance therebetween is adjustable. That is, the optical width controller 131 may include a distance adjusting mechanism (not shown) that allows a distance between the first lens 131a and the second lens 131b to vary.

The first lens 131a and the second lens 131b may be disposed in a straight line. Preferably, the first lens 131a and the second lens 131b may be disposed in a vertical direction, and the second lens 131b may be disposed below the first lens 131a. That is, the first lens 131a may be disposed between the second lens 131b and one path conversion mirror 120c in the vertical direction.

A width of the laser beam passing through the optical width controller 131 may vary according to the distance between the first lens 131a and the second lens 131b. Thus, the laser beam may be incident in parallel to the condensing lens 134 to be described later , may be incident in a divergent state, or may be incident in a converged state. Since the focal length of the condensing lens 134 is fixed, a distance between the focal spot P of the laser beam and the separator 1 may vary according to the state of the laser beam incident into the condensing lens 134.

The pair of scanning mirrors 132 and 133 may allow the focal spot P of the laser beam focused onto the separator 1 within a predetermined processing area A1. The processing area A1 may be disposed on the sheet-shaped separator 1 and may mean a cut area in each separator 1.

The pair of scanning mirrors 132 and 133 may rotate about rotation axes 132a and 133a that are perpendicular to each other. The pair of scanning mirrors 132 and 133 may include a first scanning mirror 132 and a second scanning mirror 133, which sequentially reflect the laser beam.

The first scanning mirror 132 rotates about the first rotation axis 132a and may reflect the laser beam passing through the optical width controller 131 to the second scanning mirror 133. According to the rotation of the first scanning mirror 132, the focal spot P of the laser beam may vary in a first direction (e.g., a transverse direction) within the processing area A1.

The second scanning mirror 133 rotates about the second rotational axis 133a perpendicular to the first rotational axis 132a and reflects the laser beam reflected from the first scanning mirror 132 to the condensing lens 134. According to the rotation of the second scanning mirror 133, the focal spot P of the laser beam may vary in a second direction (e.g., longitudinal direction) perpendicular to the first direction within the processing area A1.

Based on the separation 1, a height h1 of the first scanning mirror 132 may be less than that of the second scanning mirror 133. That is, the second scanning mirror 133 may be disposed at a position higher than the first scanning mirror 132 with respect to the separator 1.

The first scanning mirror 132 may be disposed below the optical width controller 131 and may reflect the laser beam passing vertically through the optical width controller 131 in an upward oblique direction toward the second scanning mirror 133.

Since the focal spot P of the laser beam move quickly within the processing area A1 only by minute rotation of each of the scanning mirrors 132 and 133, the separator cutting device 100 may also quickly cut the large-area separator 1.

The condensing lens 134 is disposed between the second scanning mirror 133 and the end mirror 135 with respect to the optical path of the laser beam.

The condensing lens 134 may be an F-theta lens.

The condensing lens 134 may condense the laser beam reflected from the pair of scanning mirrors 132 and 133 to form the focal spot P of the laser beam.

Since the condensing lens 134 has a unique focal length, a length of the optical path from the condensing lens 134 to the separator 1 in which the processing area A1 is disposed has to be secured so as to form the focal spot P within the processing area A1 on the separator 1.

Assuming that the separator cutting device 100 does not include the end mirror 135, the condensing lens 134 may be disposed to face the separator 1 in the vertical direction from an upper side of the separator 1. In this case, a vertical length between the condensing lens 134 and the separator 1 has to be secured as much as the length of the optical path. That is, since a space required for installing the separator cutting device 100 above the separator 1 has to be sufficiently large, it is difficult to apply the separator cutting device 100 to an electrode cell manufacturing system, which cuts the separator in the mechanical manner, according to the related art.

The end mirror 135 is disposed at a side of the scanner 130 to solve this problem.

The end mirror 135 reflects the laser beam passing through the condensing lens 134 toward the separator 1.

The end mirror 135 preferably has a material having high reflectance and high heat resistance with respect to the laser beam emitted from the laser generator 110. In more detail, the end mirror 135 may include at least one of copper (Cu), aluminum (Al), gold (Au), silver (Ag), tungsten (W), molybdenum (Mo), or silicon (Si).

The end mirror 135 faces the condensing lens 134 in the horizontal direction and faces the separator 1 in the vertical direction. That is, the condensing lens 134 is disposed between the end mirror 135 and the second scanning mirror 133 in the horizontal direction.

Also, a height h2 of the end mirror 135 may be greater than that of the scanner 130 with respect to the separator 1. The height of the scanner 130 may mean the height h1 of the first scanning mirror 132, which is an optical component disposed at the lowest height in the scanner 130.

The sum of a first optical path length L1 formed approximately horizontally from the condensing lens 134 to the end mirror 135 and a second optical path length L2 formed approximately vertically from the end mirror 135 to the separator 1 may mean an optical path length (L1+L2) that has to be secured according to the focal length of the condensing lens 134.

Thus, the vertical distance h2 between the separation layer 1 and the end mirror 135 may be shorter than the optical path length (L1+L2). Also, as described above, the vertical distance h1 between the separator 1 and the scanner 130 may be less than the vertical distance h2 between the separator 1 and the end mirror 135.

That is, when compared to a case in which the end mirror 135 does not exist, there is an advantage in that the space required for installation of the separator cutting device 100 above the separator 1 is reduced.

In order to secure the same area as the processing area A1, when the second optical path length L2 becomes longer, a surface area of the end mirror 135 becomes narrow, and when the second optical path length L2 becomes shorter, a surface area of the end mirror 135 becomes wider.

Therefore, in order to prevent the surface area of the end mirror 135 from becoming too wide or the second optical path length L2 from being too long, it is preferable to design an appropriate surface area of the end mirror 135.

In more detail, the surface area of the end mirror 135 may be less than or equal to half of the surface area of the processing area A1. Preferably, the surface area of the end mirror 135 may be 1/4 or less and 1/16 or more of the surface area of the processing area A1.

Also, the second optical path length L2 may be greater than the first optical path length L1. Preferably, the second optical path length L2 may be greater than or equal to 2 times and less than or equal to 4 times of the first optical path length L1.

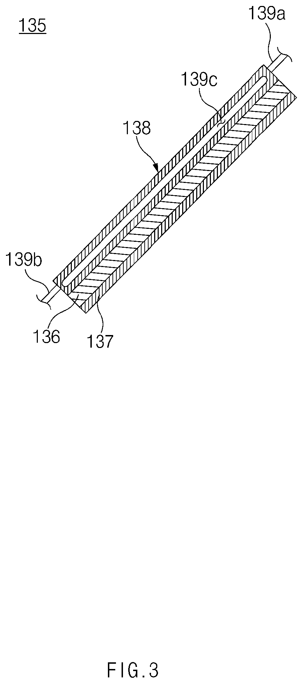

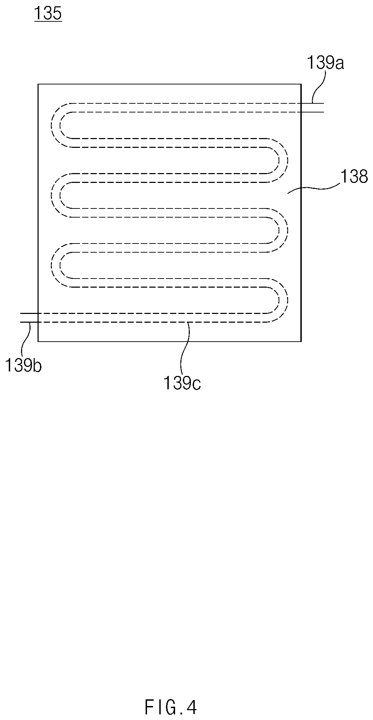

FIG. 3 is a cross-sectional view of the end mirror according to an embodiment of the present invention, and FIG. 4 is a plan view of the heatsink illustrated in FIG. 3.

The end mirror 135 may include a mirror body 136 and a coating layer 137 applied to the mirror body 136.

It is preferable that the mirror body 136 has a material having high durability and heat resistance, and the coating layer 137 has a material having reflectance higher than the mirror body. In more detail, the mirror body 136 may include at least one of copper (Cu), molybdenum (Mo), or silicon (Si), or the coating layer 137 may include at least one of a dielectric or silver (Ag).

However, it is of course also possible that the end mirror 135 does not include the coating layer 137, and the mirror body 136 directly reflects the laser beam. In this case, the mirror body 136 may include at least one of copper (Cu), aluminum (Al), gold (Au), silver (Ag), tungsten (W), molybdenum (Mo), or silicon (Si), and preferably, at least one of tungsten (W), molybdenum (Mo), or silicon (Si) having relatively high thermal stability.

The end mirror 135 may include a heatsink 138. The end mirror 135 may be maintained at approximately room temperature, and more particularly, may be maintained at 15 degrees Celsius to 30 degrees Celsius by the heatsink 138.

When the heatsink 138 is not provided in the end mirror 135, if a temperature of the end mirror 135 increases by the laser beam, the reflectance of the laser beam may decrease, and also, absorption may increase, and thus, the temperature of the end mirror 135 may further increase to deform a shape of the end mirror 135 by thermal expansion. The heatsink 138 may quickly dissipate heat from the end mirror 135 to solve this concern.

The heatsink 138 may be disposed at an opposite side of the coating layer 137 with respect to the mirror body 136. That is, the coating layer 137 may be applied to one surface of the mirror body 136, and the heatsink 138 may be provided on the other surface of the mirror body 136.

The heatsink 138 may cool the mirror body 136 in a water cooling manner. In more detail, the heatsink 138 may be a cooling plate having a passage 139c through which a refrigerant passes. An inlet 139a through which the refrigerant is introduced and an outlet 139b through which the refrigerant flows may be connected to the passage 139c. The refrigerant may be water, but is not limited thereto.

In order to increase in contact area for the refrigerant, the passage 139c may be bent at least once in the heatsink 138. For example, the passage 139c may include a plurality of straight portions extending in parallel to each other and a plurality of curved portions that alternately communicate both ends of the plurality of straight portions.

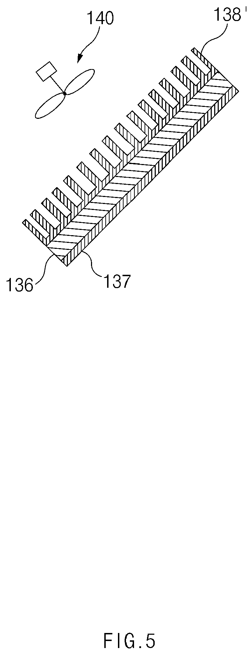

FIG. 5 is a cross-sectional view of an end mirror according to another embodiment of the present invention.

This embodiment is the same as the foregoing embodiment except that a heatsink 138' cools a mirror body 136 in an air cooling manner, and thus, duplicated content will be omitted, and differences will be mainly described below.

In this embodiment, the separator cutting device 100 may further include a heat dissipation fan 140 facing the heatsink 138' of the end mirror 135.

In this case, the heatsink 138^{'} may be a heat dissipation fin that maximizes a contact area with an air flow blown by the heat dissipation fan 140. In more detail, the heatsink 138' may include a plate that is in contact with the mirror body 136 and a plurality of fins protruding from the plate to an opposite side of the mirror body 136.

In addition, the heatsink provided in the end mirror 135 may be variously configured as necessary. For example, the heatsink may include a thermoelectric element that cools the end mirror 135 by a Peltier effect.

The above-disclosed subject matter is to be considered illustrative, and not restrictive, and the appended claims are intended to cover all such modifications, enhancements, and other embodiments, which fall within the scope of the present disclosure.

Thus, the embodiment of the present invention is to be considered illustrative, and not restrictive, and the present invention is not limited to the foregoing embodiment.

Therefore, the scope of the present invention is defined not by the detailed description of the invention but by the appended claims, and all differences within the scope will be construed as being included in the present invention.

**[Description of the Symbols]**

| | |
|---|---|
| 1: Separator | 2: Electrode |
| 3: Electrode stack | 100: Separator cutting device |
| 110: Laser generator | 120: Path conversion mirror |
| 130: Scanner | 131: Optical width controller |
| 132: First scanning mirror | 133: Second scanning mirror |
| 134: Condensing lens | 135: End mirror |
| 136: Mirror body | 137: Coating layer |
| 138: Heatsink | A1: Processing area |
| P: Focus spot | |

## Claims

1. A separator cutting device (100) for cutting a sheet-shaped separator (1) laminated **with** at least one electrode (2),
the separator cutting device (100) comprising:
a laser generator (110) configured to emit laser beam;
a scanner (130) configured to control an optical path of the laser beam emitted from the laser generator (110); and
the separator cutting device (100) being **characterised by** the following:
an end mirror (135) configured to reflect the laser beam passing through the scanner (130) toward the separator (1) and disposed at a side of the scanner
wherein the scanner (130) comprises:
a first scanning mirror (132) rotating about a first rotation axis (132a);
a second scanning mirror (133) rotating about a second rotation axis (133a) perpendicular to the first rotation axis (132a), configured to reflect laser beam reflected by the first scanning mirror (132), and
a condensing lens (134) configured to condense laser beam reflected by the second scanning mirror (133)
and wherein the condensing lens (134) is disposed between the end mirror (135) and the second scanning mirror (133) in the horizontal direction.

2. The separator cutting device (100) of claim 1, wherein a focus spot (P) of the laser beam focused onto the separator (1) is variable within a processing area on the separator (1) by the scanner (130), and
a surface area of the end mirror (135) is less than or equal to half of a surface area of the processing area (A1).

3. The separator cutting device (100) of claim 1, wherein a height of the end mirror (135) is higher than that of the scanner (130) with respect to the separator (1).

4. The separator cutting device (100) of claim 1, wherein the second scanning mirror (133) is disposed at a position higher than that of the first scanning mirror (132).

5. The separator cutting device (100) of claim 1, wherein each of the condensing lens (134) and the end mirror (135) has a height greater than that of the first scanning mirror (132) with respect to the separator (1).

6. The separator cutting device (100) of claim 1, wherein the laser generator (110) emits laser beam having a wavelength band of 9 micrometers to 10.6 micrometers.

7. The separator cutting device (100) of claim 1, wherein the end mirror (135) comprises at least one material of copper (Cu), aluminum (Al), gold (Au), silver (Ag), tungsten (W), molybdenum (Mo), or silicon (Si).

8. The separator cutting device of claim 1, wherein a heatsink is provided in the end mirror.

9. The separator cutting device (100) of claim 1, wherein the end mirror (135) comprises:
a mirror body (136); and
a coating layer (137) applied to the mirror body (136) to reflect the laser beam and having reflectance greater than that of the mirror body (136).

10. The separator cutting device (100) of claim **9,** wherein the mirror body (136) comprises at least one of copper (Cu), aluminum (Al), or silicon (Si), and
the coating layer (137) comprises at least one of a dielectric or silver.

11. An electrode cell manufacturing system comprising:
a laminator (40) configured to roll an electrode stack (3) comprising a pair of sheet-shaped separators (1) and a plurality of electrodes (2) disposed at a predetermined interval between the pair of separators (1); **characterized in that** the electrode cell manufacturing system comprises:
a separator cutting device (100) as defined in anyone of claims 1 to 10 disposed behind the laminator (40) in a moving direction of the electrode stack (3) and configured to cut a portion of each of the pair of separators (1), which corresponds between the plurality of electrodes (2).

## Patentansprüche

1. Separator-Schneidevorrichtung (100) zum Schneiden eines bahnförmigen Separators (1), welcher mit wenigstens einer Elektrode (2) laminiert ist,
wobei die Separator-Schneidevorrichtung (100) umfasst:
einen Lasergenerator (110), welcher dazu eingerichtet ist, einen Laserstrahl zu emittieren;
eine Scaneinheit (130), welche dazu eingerichtet ist, einen optischen Pfad des Laserstrahls zu steuern, welcher von dem Lasergenerator (110) emittiert ist; und
wobei die Separator-Schneidevorrichtung (100) durch das Folgende gekennzeichnet ist:
einen Endspiegel (135), welcher dazu eingerichtet ist, den Laserstrahl, welcher durch die Scaneinheit (130) tritt, in Richtung des Separators (1) zu reflektieren, und an einer Seite der Scaneinheit angeordnet ist
wobei die Scaneinheit (130) umfasst:
einen ersten Scanspiegel (132), welcher um eine erste Rotationsachse (132a) rotiert;
einen zweiten Scanspiegel (133), welcher um eine zweite Rotationsachse (133a) rotiert, welche senkrecht zu der ersten Rotationsachse (132a) ist, welcher dazu eingerichtet ist, einen Laserstrahl, welcher durch den einen ersten Scanspiegel (132) reflektiert ist, zu reflektieren, und
eine Sammellinse (134), welche dazu eingerichtet ist, einen Laserstrahl, welcher durch den zweiten Scanspiegel (133) reflektiert ist, zu sammeln
und wobei die Sammellinse (134) in der horizontalen Richtung zwischen dem Endspiegel (135) und dem zweiten Scanspiegel (133) angeordnet ist.

2. Separator-Schneidevorrichtung (100) nach Anspruch 1, wobei eine Fokusstelle (P) des Laserstrahls, welcher auf den Separator (1) fokussiert ist, in einem Verarbeitungsbereich des Separators (1) durch die Scaneinheit (130) variabel ist, und
wobei ein Flächenbereich des Endspiegels (135) kleiner oder gleich einer Hälfte eines Flächenbereichs des Verarbeitungsbereichs (A1) ist.

3. Separator-Schneidevorrichtung (100) nach Anspruch 1, wobei eine Höhe des Endspiegels (135) in Bezug auf den Separator (1) höher als die der Scaneinheit (130) ist.

4. Separator-Schneidevorrichtung (100) nach Anspruch 1, wobei der zweite Scanspiegel (133) an einer Position angeordnet ist, welche höher als die des ersten Scanspiegels (132) ist.

5. Separator-Schneidevorrichtung (100) nach Anspruch 1, wobei jedes aus der Sammellinse (134) und des Endspiegels (135) eine Höhe aufweist, welche größer ist als die des ersten Scanspiegels (132) in Bezug auf den Separator (1).

6. Separator-Schneidevorrichtung (100) nach Anspruch 1, wobei der Lasergenerator (110) einen Laserstrahl emittiert, welcher ein Wellenlängenband von 9 Mikrometer bis 10,6 Mikrometer aufweist.

7. Separator-Schneidevorrichtung (100) nach Anspruch 1, wobei der Endspiegel (135) wenigstens ein Material aus Kupfer (Cu), Aluminium (Al), Gold (Au), Silber (Ag), Wolfram (W), Molybdän (Mo) oder Silizium (Si) umfasst.

8. Separator-Schneidevorrichtung nach Anspruch 1, wobei eine Wärmesenke in dem Endspiegel bereitgestellt ist.

9. Separator-Schneidevorrichtung (100) nach Anspruch 1, wobei der Endspiegel (135) umfasst:
einen Spiegelkörper (136); und
eine Beschichtungsschicht (137), welche auf den Spiegelkörper (136) aufgebracht ist, um den Laserstrahl zu reflektieren, und eine Reflektivität aufweist, welche größer als die des Spiegelkörpers (136) ist.

10. Separator-Schneidevorrichtung (100) nach Anspruch 9, wobei der Spiegelkörper (136) wenigstens eines aus Kupfer (Cu), Aluminium (Al) oder Silizium (Si) umfasst, und
die Beschichtungsschicht (137) wenigstens eines aus einem Dielektrikum oder Silber umfasst.

11. Elektrodenzelle-Herstellungssystem, umfassend:
eine Laminierungseinheit (40), welche dazu eingerichtet ist, einen Elektrodenstapel (3) zu walzen, welcher ein Paar von bahnförmigen Separatoren (1) und eine Mehrzahl von Elektroden (2) umfasst, welche in einem vorbestimmten Intervall zwischen dem Paar von Separatoren (1) angeordnet sind; **dadurch gekennzeichnet, dass** das Elektrodenzelle-Herstellungssystem umfasst:
eine wie in einem der Ansprüche 1 bis 10 definierten Separator-Schneidevorrichtung (100), welche in einer Bewegungsrichtung des Elektrodenstapels (3) hinter der Laminierungseinheit (40) angeordnet ist und dazu eingerichtet ist, einen Abschnitt jedes aus dem Paar von Separatoren (1) zu schneiden, welcher (einem Abschnitt) zwischen der Mehrzahl von Elektroden (2) entspricht.

## Revendications

1. Dispositif de découpe de séparateur (100) destiné à découper un séparateur (1) en forme de feuille laminé avec au moins une électrode (2),
le dispositif de découpe de séparateur (100) comprenant :
un générateur laser (110) configuré pour émettre un faisceau laser ;
un scanner (130) configuré pour commander un chemin optique du faisceau laser émis par le générateur laser (110) ; et
le dispositif de découpe de séparateur (100) étant **caractérisé par** ce qui suit :
un miroir terminal (135) conçu pour réfléchir le faisceau laser traversant le scanner (130) vers le séparateur (1) et disposé sur un côté du scanner
dans lequel le scanner (130) comprend :
un premier miroir de balayage (132) tournant autour d'un premier axe de rotation (132a) ;
un second miroir de balayage (133) tournant autour d'un second axe de rotation (133a) perpendiculaire au premier axe de rotation (132a), configuré pour réfléchir un faisceau laser réfléchi par le premier miroir de balayage (132), et
une lentille de condensation (134) configurée pour condenser le faisceau laser réfléchi par le second miroir de balayage (133)
et dans lequel la lentille de condensation (134) est disposée entre le miroir terminal (135) et le second miroir de balayage (133) dans la direction horizontale.

2. Dispositif de découpe de séparateur (100) selon la revendication 1, dans lequel un point de focalisation (P) du faisceau laser focalisé sur le séparateur (1) est variable au sein d'une zone de traitement sur le séparateur (1) par le scanner (130), et
une surface superficielle du miroir terminal (135) est inférieure ou égale à la moitié d'une surface superficielle de la zone de traitement (A1).

3. Dispositif de découpe de séparateur (100) selon la revendication 1, dans lequel une hauteur du miroir terminal (135) est supérieure à celle du scanner (130) par rapport au séparateur (1).

4. Dispositif de découpe de séparateur (100) selon la revendication 1, dans lequel le second miroir de balayage (133) est disposé à une position plus élevée que celle du premier miroir de balayage (132).

5. Dispositif de découpe de séparateur (100) selon la revendication 1, dans lequel chacun de la lentille de condensation (134) et du miroir terminal (135) a une hauteur supérieure à celle du premier miroir de balayage (132) par rapport au séparateur (1).

6. Dispositif de découpe de séparateur (100) selon la revendication 1, dans lequel le générateur laser (110) émet un faisceau laser ayant une bande de longueur d'onde de 9 micromètres à 10,6 micromètres.

7. Dispositif de découpe de séparateur (100) selon la revendication 1, dans lequel le miroir terminal (135) comprend au moins un matériau parmi du cuivre (Cu), de l'aluminium (Al), de l'or (Au), de l'argent (Ag), du tungstène (W), du molybdène (Mo) ou du silicium (Si).

8. Dispositif de découpe de séparateur selon la revendication 1, dans lequel un dissipateur thermique est agencé dans le miroir terminal.

9. Dispositif de découpe de séparateur (100) selon la revendication 1, dans lequel le miroir terminal (135) comprend :
un corps de miroir (136) ; et
une couche de revêtement (137) appliquée sur le corps de miroir (136) pour réfléchir le faisceau laser et ayant une réflectivité supérieure à celle du corps de miroir (136).

10. Dispositif de découpe de séparateur (100) selon la revendication 9, dans lequel le corps de miroir (136) comprend au moins un parmi du cuivre (Cu), de l'aluminium (Al) ou du silicium (Si), et
la couche de revêtement (137) comprend au moins un parmi un diélectrique ou de l'argent.

11. Système de fabrication de cellule d'électrodes comprenant :
un laminoir (40) configuré pour rouler un empilement d'électrodes (3) comprenant une paire de séparateurs (1) en forme de feuille et une pluralité d'électrodes (2) disposées à un intervalle prédéterminé entre la paire de séparateurs (1) ; **caractérisé en ce que** le système de fabrication de cellule d'électrodes comprend :
un dispositif de découpe de séparateur (100) selon l'une quelconque des revendications 1 à 10 disposé derrière le laminoir (40) dans une direction de déplacement de l'empilement d'électrodes (3) et configuré pour découper une partie de chacun de la paire de séparateurs (1), qui correspond entre la pluralité d'électrodes (2).
